# EUROPÄISCHE PATENTANMELDUNG

(11) **EP 2 690 294 A1**
(43) Veröffentlichungstag der Anmeldung: **29.01.2014**
(21) Anmeldenummer: 12177610.8
(22) Anmeldetag: 24.07.2012
(51) Int. Cl.: F16B 39/24, F16B 43/00

(54) **Unterlegscheibe, Schraubverbindung und Verfahren zum Anziehen derselben**

(71) Anmelder: Vision Electric GmbH, 66851 Schwanenmühle (DE)
(72) Erfinder: Huwer, Stefan, 67715 Geiselberg (DE)
(74) Vertreter: Gille Hrabal

(57) **Zusammenfassung**

Die erfindungsgemäße Unterlegscheibe 1 mit einem horizontalen Abschnitt 11 mit einer Öffnung 13, wobei sich entlang der Öffnung ein vertikaler Abschnitt 12 nach oben erstreckt, ist dadurch gekennzeichnet, dass ein Federelement 2 zum Verhindern einer Lockerung einer Schraubverbindung 3 vorgesehen ist, wobei das Federelement einen unteren Rand 21 zum Aufsetzen auf den horizontalen Abschnitt der Unterlegscheibe und einem oberen Rand 22 zum Aufnehmen einer Kraft von einem Schraubenkopf einer Schraube oder einer Mutter aufweist; und die Unterlegscheibe derart dimensioniert ist, dass das auf der Unterlegscheibe aufgesetzte Federelement mit seinem unteren Rand im unbelasteten und vorzugsweise im voll-belasteten Zustand auf dem horizontalen Abschnitt liegen kann; der obere Rand des auf der Unterlegscheibe aufgesetzten Federelementes den vertikalen Abschnitt der Unterlegscheibe überragt, wenn es unbelastet ist und der vertikale Abschnitt den oberen Rand des auf der Kragenscheibe aufgesetzten Federelementes überragt, wenn es voll-belastet wäre.

## Beschreibung

Die Erfindung betrifft eine Unterlegscheibe, insbesondere eine Unterlegscheibe zusammen mit einem Federelement zur Sicherung von Schraubenverbindungen. Ferner betrifft sie eine Schraubverbindung sowie ein Verfahren zum Anziehen derselben.

Federringe und Spannscheiben sind mitverspannte Federelemente, z. B. in Form einer Tellerfeder, deren Sicherungswirkung ausschließlich auf Kraftschluss beruht. Sie sollen einem Lockern der Schraubverbindungen, wie durch Setzbeträge, entgegenwirken, indem sie durch Federkräfte eine hinreichend hohe Vorspannung in der Verbindung aufrechterhalten.

Unter einer Tellerfeder versteht man eine kegelige Ringschale, die in Achsrichtung belastbar ist und sowohl ruhend als auch schwingend beansprucht werden kann. Die Krafteinleitung erfolgt normalerweise über den oberen Innenrand und den unteren Außenrand.

Unterlegscheiben oder Beilagscheiben werden verwendet, um die Kraft des Schraubenkopfes einer Schraube oder Mutter auf das Material zu übertragen. Unterlegscheiben sind in seltenen Fällen gehärtet, damit die Verformungen bei vorgespannten Schraubenverbindungen kalkulierbar bleiben und kein Fließen auftritt. Bei weichen Werkstoffen, beispielsweise Kupfer, haben Unterlegscheiben die Aufgabe, die Schraubenkraft auf eine größere Fläche zu verteilen und das Einsinken oder Eingraben des Schraubenkopfes in das (weichere) Material zu verhindern. Der Einsatz einer Unterlegscheibe kann auch in Betracht gezogen werden, um die von Federelementen nur sehr punktuell eingeleiteten Kräfte gleichmäßiger zu verteilen und ein Eingraben in den weichen Untergrund zu verhindern. Dies spielt insbesondere bei Stromschienenverschraubungen eine große Rolle: Bei den Stromschienenverschraubungen nach DIN 43673 T1 werden Spannscheiben nach DIN 6796 eingesetzt um den durch Setzungen bedingten Vorspannkraftverlust auszugleichen. Eine Setzung von 20µm ergibt laut DIN 267 Teil 26 bereits einen erheblichen Vorspannkraftverlust im Bereich von 30-50%. Des Weiteren sollen Spannscheiben einen Ausgleich schaffen für das sogenannte "Atmen" der Verbindung. Damit sind das weitere, wiederholte Verspannen und das wiederholte Lösen der weiteren Verspannung durch Erwärmen und Abkühlen der gesamten Verbindung aufgrund der entstehenden Stromwärme gemeint, wenn der Stromfluss eingeschaltet bzw. abgeschaltet wird. Dazu müssen die Spannscheiben nach dem ersten Anziehen aber noch genügend Luft zum "Atmen" haben, dürfen also nicht ganz flach gedrückt sein. Üblicherweise wird das über die Festlegung eines Anziehmoments sichergestellt, was einen Drehmomentschlüssel sowie dessen fachgerechte Einstellung und Bedienung erfordert. Ferner besteht das erhebliche Problem, dass selbst bei korrekt eingestelltem Drehmoment unterschiedliche Vorspannkräfte auftreten können, da der Reibwert unter der Kopfauflage und im Gewinde der Schraube normalerweise nicht exakt gleich den der Errechnung der Drehmomentwerte zugrundeliegenden Werten sind. Außerdem muss der am Drehmomentschlüssel angezeigte Wert aus ähnlichen Gründen nicht unbedingt gleich dem Wert sein, der tatsächlich an der Verschraubung angreift. Der auftretende Maximalwert der Vorspannkraft darf den Wert der Kraft nicht übersteigen, der der Spannscheibe genügend Luft zum "Atmen" lässt. Dieser Wert wiederum lässt sich aus der Plattendicke und der zu den Plattenmaterialien und der Schraube gehörigen Wärmeausdehnungskoeffizienten errechnen und ist in der Praxis nur dann von Bedeutung wenn mindestens eine der Platten aus einem Material besteht, dessen Ausdehnungskoeffizient deutlich größer ist als der des Schraubenmaterials.

Die Schraubverbindung muss dabei so ausgelegt sein, dass im Zustand der maximal zu erwartenden Temperatur keine plastische Verformung der beteiligten Werkstücke zu erwarten ist. Das festzulegende Anziehmoment muss daher nachteilhafterweise deutlich kleiner festgelegt werden als es die Schraubenfestigkeit üblicherweise erwarten lässt. Wird versehentlich beim Anziehen die Spannscheibe im Zustand der maximalen Temperatur ganz flach gedrückt findet in manchen Randzonen plastische Verformung statt und die Spannscheibe verliert an Spannkraft. Sie ändert ihre Federkonstante und würde im Falle der Demontage nicht mehr auf ihre Originalhöhe zurückfedern. Solche Spannscheiben sollen nicht wieder verwendet werden. Es ist also anzustreben, dass die Spannscheibe zu keinem Zeitpunkt flach gedrückt wird.

Bei konventionellen Verschraubungen besteht außerdem die Gefahr, dass Verschraubungen in der Elektrotechnik vom Werker aus Unwissenheit oft zu stark angezogen werden um einen besonders guten Kontakt herzustellen. In einigen Fällen hat das in Verbindung mit dem beschriebenen "Atmen" schon dazu geführt, dass auch die Platten plastisch verformt wurden und sich die Verschraubung mit der Zeit auch lockerte und zu Ausfällen der elektrischen Verbindung geführt hat. Des weiteren stellt man besonders bei weichen Plattenmaterialien fest, dass die Setzung durch "Eingraben" des scharfkantigen Randes der Spannscheibe in das Plattenmaterial besonders stark ist und in Zweifelsfällen mit zusätzlichen Scheiben DIN 9021 eine "harte" Unterlage geschaffen werden muss.

Es ist daher Aufgabe der Erfindung, eine verbesserte Unterlegscheibe, Schraubverbindung und ein Verfahren zum Anziehen derselben bereitzustellen.

Diese Aufgabe wird gelöst durch eine Unterlegscheibe mit den Merkmalen des Hauptanspruchs. Eine entsprechende Schraubverbindung sowie ein Verfahren zum Anziehen derselben wird durch die Merkmale der nebengeordneten Ansprüche angegeben. Vorteilhafte Ausgestaltungen sind Gegenstand der Unteransprüche.

Die erfindungsgemäße Unterlegscheibe weist einen horizontalen Abschnitt mit einer Öffnung auf, was einer konventionellen Unterlegscheibe entspricht. Abweichend davon ist entlang der Öffnung ein vertikaler Abschnitt vorgesehen, welcher sich nach oben, also im Wesentlichen senkrecht zum horizontalen Abschnitt, erstreckt. Der vertikale Abschnitt kann dabei abschnittsweise, punktweise oder umlaufend entlang der Öffnung verlaufen. Letzterer Fall entspricht der aus dem Stand der Technik bekannten und für andere Zwecke eingesetzten Kragenscheibe. Die erfindungsgemäße Besonderheit liegt nun darin, dass auf der Unterlegscheibe ein Federelement zum Verhindern einer Lockerung einer Schraubverbindung vorgesehen ist. Das Federelement weist - wie üblich - einen unteren Rand zum Aufsetzen auf den horizontalen Abschnitt der Unterlegscheibe und einem oberen Rand zum Aufnehmen einer Kraft von einem Schraubenkopf einer Schraube oder einer Mutter auf.

Die Kombination dieser beiden Bauteile ermöglicht bei richtiger Auslegung, dass auf einen Drehmomentschlüssel verzichtet werden kann, weil beim Anziehen der Schraubverbindung eine deutliche und sprunghafte Erhöhung der Anziehkraft notwendig wird, sobald das Federelement bis auf die Höhe des horizontalen Abschnitt zusammengedrückt wurde. Wenn der Bediener die Schraubverbindung darüber hinaus versucht anzuziehen, wird nicht nur die Feder zusätzlich belastet, sondern hauptsächlich der steifere vertikale Abschnitt.

Dabei ist erfahrungsgemäß die Unterlegscheibe derart dimensioniert, dass das auf der Unterlegscheibe aufgesetzte Federelement mit seinem unteren Rand im unbelasteten und vorzugsweise im voll-belasteten Zustand auf dem horizontalen Abschnitt liegen kann. Somit ist sichergestellt, dass kein unmittelbarer Kontakt zwischen Federelemente und dem zu verschraubenden Material, zum Beispiel eines Kupfer- oder Aluminiumleiters, erfolgt, welcher nachteilhafterweise zum Eingraben führen würde, In jedem Fall ist sicherzustellen, dass der untere Rand des Federelements stets auf der Unterlegscheibe liegt, solange das Federelement ordnungsgemäß angezogen und verspannt ist.

Zur Realisierung der Erfindung ist es nötig, dass die Unterlegscheibe und das Federelement so aufeinander abgestimmt sind, dass
a) der obere Rand des auf der Unterlegscheibe aufgesetzten Federelementes den vertikalen Abschnitt der Unterlegscheibe überragt, wenn es unbelastet ist und
b) der vertikale Abschnitt den oberen Rand des auf der Kragenscheibe aufgesetzten Federelementes überragt, wenn es voll-belastet ist.

Dadurch wird sichergestellt, dass das Federelement nicht versehentlich beim Anziehen übermäßig belastet und damit dauerhaft verformt werden kann. Es verbleibt immer eine Restfederhöhe.

Daher wird unter dem voll-belasteten Zustand des Federelements die Belastung des - nicht mit der erfindungsgemäßen Unterlegscheibe verbundenen - Federelements verstanden, bei welcher es durch übermäßige Krafteinleitung dauerhaft verformt werden würde. Es ist also kein gewünschter Betriebszustand, sondern ein Zustand, der erfindungsgemäß mit der Unterlegscheibe verhindert wird.

Durch den horizontalen Abschnitt, der bei entsprechender Auslegung das Zusammendrücken des Federelementes bis zu einem ungünstigen Betriebspunkt verhindert, vermindert sich der Vorspannkraftverlust durch Setzungen: Die Setzung ist erfindungsgemäß in einen Bereich mit deutlich flacherem Verlauf der Federkennlinie verlagert. Es wurde beobachtet, dass der Vorspannkraftverlust in eine Größenordnung von weniger als 10% der planmäßigen Feder- bzw. Vorspannkraft kommt. Das bedeutet eine höhere Sicherheit bei den Verschraubungsparametern. Insbesondere bei den oben beschriebenen weichen Materialien bei Stromschienen-Verschraubungen führt die Verwendung der erfindungsgemäßen Unterlegscheibe auch ohne zusätzliche Unterlegscheibe DIN 9021 zu deutlich verminderter Setzung, da der scharfkantige Rand des Federelements sich in der Unterlegscheibe nicht eingräbt und diese wiederum verglichen mit dem direkten Linienkontakt eines Federelements, insbesondere einer Spannscheibe/Tellerfeder auf dem Plattenmaterial mit einem deutlich verminderten Flächendruck unterhalb des Unterlegscheibenrandes einwirkt.

Wenn sich der vertikale Abschnitt bis zu einer Höhe erstreckt, die der Höhe des oberen Randes des Federelementes entspricht, wenn dieses zwischen 60-95% des maximalen Federweges eingefedert ist, ist sichergestellt, dass die Feder in einem günstigen Bereich der Federkennlinie verläuft und kleinere Setzungen nur zu geringen Änderungen der die Verschraubung verspannenden Federkraft führen.

Grundsätzlich kann der vertikale Abschnitt, auf welchen beim Anziehen der Schraubverbindung der Schraubenkopf bzw. die Mutter aufsetzen soll, beliebig gestaltet sein. Grundsätzlich wäre ein einziger, punktueller Abschnitt ausreichend. Ebenso können auch eine Vielzahl von Abschnitten, zum Beispiel nach Art eines Zahnrings, rund um die Öffnung der Unterlegscheibe vorgesehen sein. Ferner ist es nicht zwingend notwendig, dass der vertikale Abschnitt exakt senkrecht zum horizontalen Abschnitt der Unterlegscheibe verläuft, er muss lediglich eine geeignete vertikale Komponente aufweisen, um das vollständige Zusammendrücken des Federelementes verhindern zu können. Dabei kann der vertikale Abschnitt auch so ausgelegt sein, dass er bei höheren Kräften elastisch oder plastisch nachgibt, wie weiter unten näher erläutert wird.

Vorzugsweise ist die Unterlegscheibe nach Art einer Kragenscheibe ausgestaltet mit einem entlang der Öffnung umlaufenden Kragen als vertikaler Abschnitt. Es handelt sich dabei um ein besonders einfach herzustellendes Bauteil, welches zudem rotationssymmetrisch ist.

Vorzugsweise ist das Federelement nach Art einer Tellerfeder ausgestaltet, welches einen für diesen Anwendungsfall besonders geeignet Bauform darstellt. Es ist ebenfalls rotationssymmetrisch und kann daher einfach und kompakt mit der Kragenscheibe verbunden werden. Dabei kann die Öffnung der Tellerfeder an dem umlaufenden Kragen gegen diesen federnd beweglich anliegen. Dadurch erfolgt eine Zentrierung der Bauteile gegeneinander und diesen eine kompakte Bauform ein. Ferner können die beiden Bauteile dadurch derart miteinander verbunden sein, dass sich beim Bereitstellen und Montieren die beiden Bauteile nicht lösen können, aber dennoch das Einfedern der Tellerfeder möglich ist.

Wenn auch der vertikale Abschnitt, z. B. der Kragen, in vertikaler Richtung verformbar, vorzugsweise dauerhaft verformbar ist, kann der vertikale Abschnitt auf besonders starke Schraubenkräfte reagieren, in die zum Beispiel dann auftreten können, wenn die mittels der Schraubverbindung verbundenen Platten sich infolge Erwärmung ausdehnen. Dies wird auch als "Atmen des Materials" bezeichnet. Andernfalls würden sich in Verformungen zu verschraubenden Material oder übermäßige Belastung der Schraubverbindung ergeben. Erfahrungen zeigen, dass vorzugsweise der vertikale Abschnitt derart ausgelegt ist, dass die zur Verformung notwendigen Kraft dem 1,2 bis 3-fachen derjenigen Federkraft entspricht, die das Federelement ausübt, wenn dessen oberer Rand auf der Höhe des vertikalen Abschnitts liegt. Dadurch wird einerseits eine übermäßige Beanspruchung der Feder verhindert und andererseits ausreichend Federspiel zum Auffangen von Setzungen gewährleistet. Die Verformbarkeit kann z. B. durch Ausnehmungen, insbesondere kreisartige oder schlitzartige, in dem vertikalen Abschnitt realisiert werden, welche dessen vertikale Steifigkeit reduziert.

Vorzugsweise ist die Unterlegscheibe mit dem Federelement kraft-, stoff- und/oder formschlüssig verbunden. Der Bediener kann daher auf ein einziges kompaktes Bauteil zurückgreifen und muss bei der Montage nicht die Unterlegscheibe mit dem Federelemente verbinden. Dabei ist sicherzustellen, dass ein Federn des oberen Randes beim Aufnehmen einer Kraft von einem Schraubenkopf einer Schraube oder einer Mutter relativ zur Unterlegscheibe möglich ist.

Die Verbindung kann auf vielerlei Art erfolgen, z. B. indem die Verbindung der Unterlegscheibe mit dem Federelement durch Klemmkräfte zwischen dem Kragen und der Öffnung der Tellerfeder erfolgt. Die Verbindung kann auch bewirkt werden durch Verschweißung, Verlötung oder Verklebung des unteren Randes des Federelements mit dem horizontalen Abschnitt der Unterlegscheibe. Wenn dabei die Verbindung lediglich punktweise erfolgt, insbesondere nur an drei Punkten, vorzugsweise zwei Punkten, vorzugsweise einem Punkt, wird die Federcharakteristik des Federelemente kaum beeinflusst.

Erfindungsgemäß wird auch eine Schraubverbindung mit einer Schraube mit einem Schraubenkopf und/oder einem Gewinde mit einer darauf aufgeschraubter Mutter und der oben beschriebenen Unterlegscheibe mit Federelement beansprucht, wobei am oberen Rand des Federelements der Schraubenkopf der Schraube oder die Mutter aufliegt und dabei das Federelement spannt.

Ein Verfahren zum Anziehen dieser Schraubverbindung umfasst die folgenden Schritte:
a) Drehen der Schraube oder der Mutter dabei Spannen des Federelements;
b) Beenden der Drehbewegung sobald das zum Drehen erforderlichen Drehmoment ansteigt, insbesondere um mehr als 20%, wegen des Anstoßens des Schraubenkopfs oder der Mutter gegen den auf vertikalen Abschnitt.

Es kann auf einen Drehmomentschlüssel verzichtet werden weil beim Anziehen eine deutliche und sprunghafte Erhöhung der Anziehkraft notwendig wird, die bei entsprechender Instruktion des Bedieners erkannt wird und das Erreichen der maximal notwendigen Anzugskraft signalisiert. Des Weiteren kann der vertikale Abschnitt so festgelegt werden, dass die für die praktischen Anwendungen zu erwartende notwendige Restfederhöhe Federelements sichergestellt wird.

Schließlich kann nach dem oben genannten Schritt b) in der Bediener die Schraube oder Mutter in Gegenrichtung um einen zuvor definierten Winkel drehen und dabei das Federelement entspannen. Beim "Atmen des Materials" ist die Schraubverbindung somit in Höhe der Federkraft verspannt und setzt nicht sofort auf den vertikalen Abschnitt auf. Es kann in diesem Fall auf die oben beschriebene Auslegung der Nachgiebigkeit des vertikalen Abschnitts verzichtet werden, die in Abhängigkeit von der gewünschten Verspannung je nach Anwendungsfall variieren müsste. Eine Unterlegscheibe kann daher für alle Anwendungsfälle eingesetzt werden. Die zur Verformung des vertikalen Abschnitts notwendigen Kraft kann daher beliebig groß sein, sollte aber mindesten dem 1,2 fachen derjenigen Federkraft entsprechen, die das Federelement ausübt, wenn dessen oberer Rand auf der Höhe des vertikalen Abschnitts liegt.

Weitere Vorteile ergeben sich aus der folgenden Beschreibung und den beigefügten Figuren. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter.

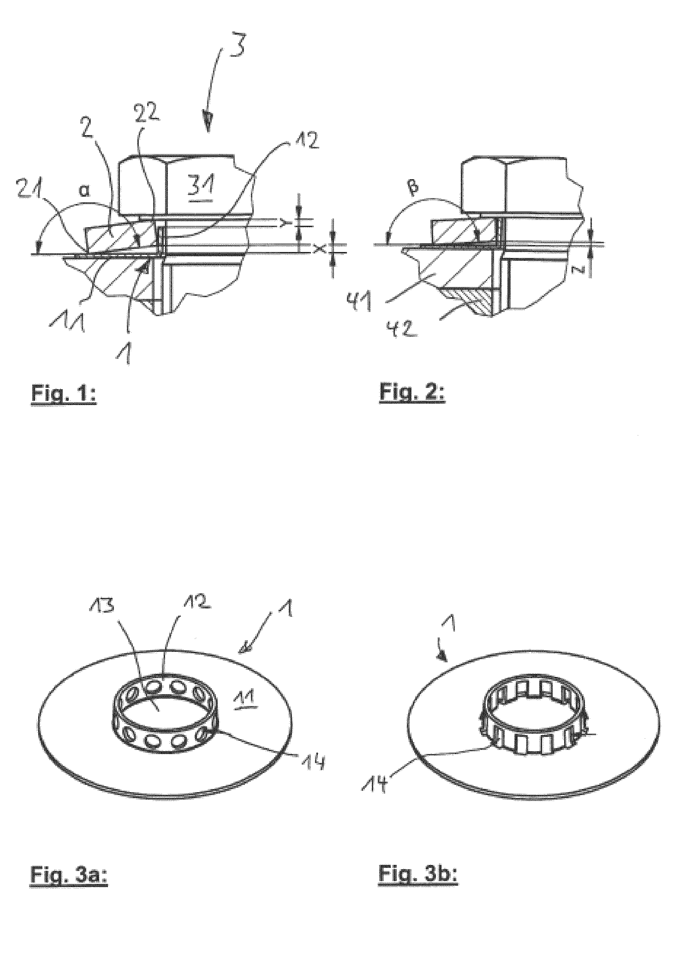

Fig. 1 zeigt im Halbschnitt eine Verschraubung 3, 31 im handfest montierten Zustand, z. B. zur Verschraubung zwei Bauteilen 41, 42, z. B. Stromschienen (Fig.2). Das als Tellerfeder ausgebildete Federelement 2 ist im entspannten Zustand zu sehen und liegt auf dem horizontalen Abschnitt 1 1 der Unterlegscheibe 1 , die hier als Kragenscheibe ausgebildet ist, auf, wobei sich der dargestellte Auflagewinkel α kleiner als 175°, das Spaltmaß Y>0 zwischen Unterseite des Schraubenkopfes 31 und der Oberkante des vertikalen Abschnitts 12 und das Maß X, nämlich die Strecke, die die Tellerfeder bis zum voll-belasteten Zustand durchgedrückt werden könnte, einstellen.

Beim Anziehen der Schraubverbindjung 3 erhöht sich die Anziehkraft proportional zu der durch die Federkennlinie der Tellerfeder2 entstehenden Vorspannkraft am Schaft der Schraube 3. Bei weiterem Anziehen wird der Spalt Y nach und nach kleiner und verkleinert sich bis auf den Wert 0. In diesem Moment steigt die notwendige Anziehkraft sprunghaft an. Dieser Zustand ist in Fig. 2 beschrieben:

Das Maß X hat sich dann um das Maß Y auf das Maß Z verkleinert. Das Maß Z entspricht einem Wert der größer oder gleich dem erforderlichen Restfederweg ist und ist daher größer 0. Der Auflagewinkel α hat sich auf den Auflagewinkel β vergrößert, der immer noch < 180 ist. Die Verschraubung ist damit sicher angezogen. Die geometrischen Festlegungen durch die Kragenscheibe stellen sicher, dass genügend Vorspannkraft im Schaft der Schraube 3 und genügend Restfederweg der Spannscheibe 2 vorhanden sind.

Fig. 3a und 3b zeigen zwei Ausführungsbeispiele der erfindungsgemäßen Unterlegscheibe, die hier als Kragenscheibe 1 ausgeführt sind. Der flache horizontale Abschnitt 1 1 weist im Zentrum eine Öffnung 13 zum Durchführen der Schraube auf. Die Öffnung 13 wird vom vertikalen Abschnitt 12, also dem Kragen der Kragenscheibe umfasst. Dessen Wand weist Öffnungen 14 auf, die die vertikale Steifigkeit des Kragens definiert schwächen und damit dessen gewollte Verformbarkeit gezielt und geplant ermöglichen.

## Patentansprüche

1. Unterlegscheibe (1) mit einem horizontalen Abschnitt (11) mit einer Öffnung (13), wobei sich entlang der Öffnung (13) ein vertikaler Abschnitt (12) nach oben erstreckt,
**dadurch gekennzeichnet, dass**
ein Federelement (2) zum Verhindern einer Lockerung einer Schraubverbindung (3) vorgesehen ist, wobei das Federelement (2) einen unteren Rand (21) zum Aufsetzen auf den horizontalen Abschnitt (11) der Unterlegscheibe (1) und einem oberen Rand (22) zum Aufnehmen einer Kraft von einem Schraubenkopf (31) einer Schraube (3) oder einer Mutter aufweist; und
vorzugsweise die Unterlegscheibe (1) derart dimensioniert ist, dass das auf der Unterlegscheibe aufgesetzte Federelement mit seinem unteren Rand (21) im unbelasteten und vorzugsweise im voll-belasteten Zustand auf dem horizontalen Abschnitt (11) liegen kann;
der obere Rand (22) des auf der Unterlegscheibe aufgesetzten Federelementes (2) den vertikalen Abschnitt (12) der Unterlegscheibe überragt, wenn es unbelastet ist und
der vertikale Abschnitt (1 2) den oberen Rand (22) des auf der Kragenscheibe aufgesetzten Federelementes (2) überragt, wenn es voll-belastet ist.

2. Unterlegscheibe nach Anspruch 1 , **dadurch gekennzeichnet, dass** der vertikale Abschnitt (1 2) sich bis zu einer Höhe erstreckt, die der Höhe des oberen Randes (22) des Federelementes entspricht, wenn dieses zwischen 60-95% des maximalen Federweges eingefedert ist.

3. Unterlegscheibe nach einem der vorherigen Ansprüche, **dadurch gekennzeichnet, dass** die Unterlegscheibe nach Art einer Kragenscheibe ausgestaltet ist mit einem entlang der Öffnung umlaufenden Kragen als vertikaler Abschnitt.

4. Unterlegscheibe nach einem der vorherigen Ansprüche, **dadurch gekennzeichnet, dass** das Federelement nach Art einer Tellerfeder ausgestaltet ist, deren Öffnung an dem vertikalen Abschnitt, insbesondere dem umlaufenden Kragen, und gegen diesen federnd beweglich anliegt.

5. Unterlegscheibe nach einem der vorherigen Ansprüche, **dadurch der vertikale** Abschnitt, insbesondere der Kragen, in vertikaler Richtung verformbar, vorzugsweise dauerhaft verformbar ist, wobei der vertikale Abschnitt derart ausgelegt ist, dass die zur Verformung notwendigen Kraft dem 1,2 bis 3-fachen derjenigen Federkraft entspricht, die das Federelement ausübt, wenn dessen oberer Rand auf der Höhe des vertikalen Abschnitts liegt.

6. Unterlegscheibe nach einem der vorherigen Ansprüche, **dadurch gekennzeichnet, dass** der vertikale Abschnitt (1 2) Ausnehmungen (14), insbesondere kreisartige oder schlitzartige, zur Erreichung der Verformbarkeit in vertikaler Richtung, aufweist.

7. Unterlegscheibe nach einem der vorherigen Ansprüche, **dadurch gekennzeichnet, dass** die Unterlegscheibe mit dem Federelement kraft-, stoff- und/oder formschlüssig verbunden ist, derart, dass ein Federn des oberen Randes (22) beim Aufnehmen einer Kraft von einem Schraubenkopf (31) einer Schraube (3) oder einer Mutter relativ zur Unterlegscheibe möglich ist.

8. Unterlegscheibe nach einem der vorherigen Ansprüche, **dadurch gekennzeichnet, dass** die Verbindung der Unterlegscheibe mit dem Federelement durch Klemmkräfte zwischen dem Kragen und der Öffnung der Tellerfeder erfolgt oder durch Verschweißung, Verlötung oder Verklebung des unteren Randes des Federelements mit dem horizontalen Abschnitt der Unterlegscheibe, insbesondere lediglich punktweise, insbesondere nur an drei Punkten, vorzugsweise zwei Punkten, vorzugsweise einem Punkt.

9. Schraubverbindung oder mittels einer solchen verbundene Stromschienen, mit einer Schraube (3) mit einem Schraubenkopf (31) und/oder einem Gewinde mit einer darauf aufgeschraubter Mutter und einer Unterlegscheibe nach einem der vorherigen Ansprüche, wobei am oberen Rand (22) des Federelements der Schraubenkopf (31) der Schraube (3) oder die Mutter aufliegt und dabei das Federelement spannt.

10. Verfahren zum Anziehen einer Schraubverbindung nach Anspruch 9, insbesondere beim Verbinden von Stromschienen, mit folgenden Schritten:
a) Drehen der Schraube oder der Mutter dabei Spannen des Federelements;
b) Beenden der Drehbewegung sobald das zum Drehen erforderlichen Drehmoment ansteigt, insbesondere um mehr als 20%, wegen des Anstoßens des Schraubenkopfs oder der Mutter gegen den auf vertikalen Abschnitt.

11. Verfahren nach Anspruch 1 0, mit folgendem Schritt nach Schritt b):
- c) Drehen der Schraube oder der Mutter in Gegenrichtung um einen zuvor definierten Winkel und dabei Entspannen des Federelements.
